# EUROPÄISCHE PATENTANMELDUNG

(11) **EP 1 375 123 A1**
(43) Veröffentlichungstag der Anmeldung: **02.01.2004**
(21) Anmeldenummer: 03013668.3
(22) Anmeldetag: 17.06.2003
(51) Int. Cl.: B31B 19/64, B29C 65/18, B29C 65/00

(54) **Gerät zum Durchlaufversiegeln von Folienbeuteln**

(30) Priorität: 25.06.2002 DE 20209855 U
(71) Anmelder: Wolf, Hans, 74821 Mosbach-Sattelbach (DE); Wolf, Christian, 74821 Mosbach (DE)
(72) Erfinder: Wolf, Hans, 74821 Mosbach-Sattelbach (DE); Wolf, Christian, 74821 Mosbach (DE)
(74) Vertreter: Wolf, Günter, Dipl.-Ing.

(57) **Zusammenfassung**

Die Erfindung betrifft ein Gerät zum Durchlaufversiegeln von Folienbeuteln, umfassend eine einen Auflagetisch (1) aufweisende Förderstrecke (2) mit Folienbeutelförderelementen (3) und eine an der Förderstrecke (2) angeordnete Heißsiegelstation (4) zum Versiegeln der relativ zum Auflagetisch (1) geförderten Folienbeutel. Nach der Erfindung ist vorgesehen, dass am Gerät zur Folienbeutelmaterialermittlung eine mit der Heißsiegelstation (4) verbundene Kontrolleinheit (7) angeordnet ist, die eine ein Licht definierter Wellenlänge abgebende Lichtquelle (5) und dazu mindestens folienbeuteldick distanziert einen das von der Lichtquelle (5) abgegebene Licht mindestens teilweise aufnehmenden optischen Sensor (6) umfasst.

## Beschreibung

Die Erfindung betrifft ein Gerät zum Durchlaufversiegeln von Folienbeuteln gemäß dem Oberbegriff des Anspruchs 1.

Derartige Geräte sind beispielsweise nach der DE 296 10 976 U1 oder auch nach der DE 200 19 799 U1 bekannt (zusätzlich wird noch auf die EP 0 304 795 A2, EP 1 125 846 A1, DE 24 55 064 C2 und DE 198 05 932 A1 hingewiesen) und dienen dazu, einseitig offene Beutel längs ihres Öffnungsrandes zu versiegeln, um beispielsweise in den Beuteln durch Versiegelung eingeschlossene, medizinische Instrumente zusammen mit den Beuteln sterilisieren und anschließend für eine gewisse Zeit sterilisiert verfügbar halten zu können.

Ein solches Gerät besteht insbesondere aus einem Auflagetisch mit einem Einlauf für die einzeln einzuführenden Folienbeutel. Am Auflagetisch, der mit den ihm zugeordneten Folienbeutelförderelementen eine Förderstrecke bildet, ist eine Heißsiegelstation angeordnet, die abhängig vom jeweils verwendeten Folienbeutelmaterial etwa in einem Temperaturbereich zwischen 120°C und 190°C arbeitet, wobei die Qualität der Siegelnaht von den Siegelparameter Temperatur, Anpressdruck und Siegelzeit abhängt. Bei konstanten Parametern Druck und Zeit bestimmt die für das jeweilige Siegelmaterial festgelegte Temperatur die Festigkeit und damit die Qualität der Siegelnaht.

Aufgrund der auf dem Markt verfügbaren Vielfalt von Folienmaterialen (z. B. Papierbeutel nach DIN EN 868-4, Klarsichtverpackungen aus Polyprophylen, Polyethylen oder Kunststoffverbundbeuteln nach DIN EN 868-5, TYVEK-Material der Firma Du Pond) besteht das Problem, dass der Benutzer des Gerätes entweder aus Unachsamkeit oder auch aufgrund von Unkenntnis nicht die zum Material passende Siegeltemperatur einstellt, was natürlich zu einer Verschlechterung der Siegelnahtqualität führt, und zwar entweder bei zu geringer Temperatur zu einer nur teilweisen Versiegelung oder bei zu hoher Temperatur zum Verbrennen des Materials, teilweise sogar mit der Folge, dass das ganze Gerät verklebt wird und anschließend Instand gesetzt werden muss.

Der Erfindung liegt dementsprechend die Aufgabe zugrunde, das Siegelgerät der eingangs genannten Art auf technisch möglichst einfache Art und Weise dahingehend zu verbessern, dass die Siegelstation automatisch auf die jeweils für das verwendete Material passende Temperatur eingestellt ist.

Diese Aufgabe wird mit einem Gerät zum Durchlaufversiegeln der eingangs genannten Art durch die im Kennzeichen des Anspruchs 1 aufgeführten Merkmale gelöst.

Der Erfindung liegt mithin der Gedanke zugrunde, am Gerät eine optische Kontrolleinheit vorzusehen, die in der Lage ist, das verwendete Material zu detektieren. Diese Information wird dann auf elektronischem Wege an die Heißsiegelstation weitergeleitet, die ihrerseits daran orientiert die für das Material geeignete Siegeltemperatur einstellt.

Die Detektion geschieht dabei folgendermaßen: Die Lichtquelle, vorzugsweise ein Laserlicht mit definierter Wellenlänge (beispielsweise 650 nm), durchstrahlt zunächst den Folienbeutel. Das durch das Material des Folienbeutels hindurchdringende Licht trifft dann auf den gegenüber der Lichtquelle angeordneten optischen Sensor, der je nach ankommender Lichtintensität ein entsprechendes elektrisches Signal erzeugt. In einem Speicher der Kontrolleinheit sind die mittels einer Kalibrationsmesserung ermittelten typischen Materialdaten abgespeichert (es ergeben sich, wie Versuche gezeigt haben, überraschender Weise sehr gut reproduzierbare Ergebnisse), die dann mit den Messdaten verglichen werden können. Die Information bezüglich des ermittelten Materials bzw. insbesondere die damit verknüpfte Information bezüglich der optimalen Siegeltemperatur wird anschließend, wie erwähnt, an die Heißsiegelstation weitergeleitet.

Bei der erfindungsgemäß Lösung ist es dabei natürlich prinzipiell gleichgültig, an welcher Stelle des Gerätes die Kontrolleinheit angeordnet ist. Zweckmäßiger Weise ist aber vorgesehen, dass diese am Einlauf, d. h. am Anfang der Förderstrecke plaziert ist, um praktisch in einem Durchgang die Materialbestimmung, die Temperatureinstellung der Heißsiegelstation auf das ermittelte Material und die Siegelung selbst vornehmen zu können. Je nach dem, auf welches Material die Heißsiegelstation bei der letzten Siegelnaht eingestellt war, kann es natürlich einen Moment dauern, bis die Nachregelung erfolgt ist. Dies wird aber durch entsprechende Anzeige an einem Display dem Benutzer mitgeteilt und die Folienbeutelförderelemente sind so programmiert, dass sie den Folienbeutel erst dann zur Heißsiegelstation weitertransportieren, wenn diese die für dieses Material optimale Temperatur hat.

Andere vorteilhafte Weiterbildungen ergeben sich aus den abhängigen Ansprüchen.

Das erfindungsgemäße Gerät zum Durchlaufversiegeln einschließlich seiner vorteilhaften Weiterbildungen gemäß der abhängigen Ansprüche wird nachfolgend anhand der zeichnerischen Darstellung eines Ausführungsbeispiels näher erläutert.

### Es zeigt schematisch

- Fig. 1: in Vorderansicht das Gerät zum Durchlaufversiegeln von Folienbeuteln mit der erfindungsgemäßen Kontrolleinheit am Anfang der Förderstrecke und
- Fig. 2: in Draufsicht (teilweise abgeschnitten) das Gerät gemäß Fig. 1.

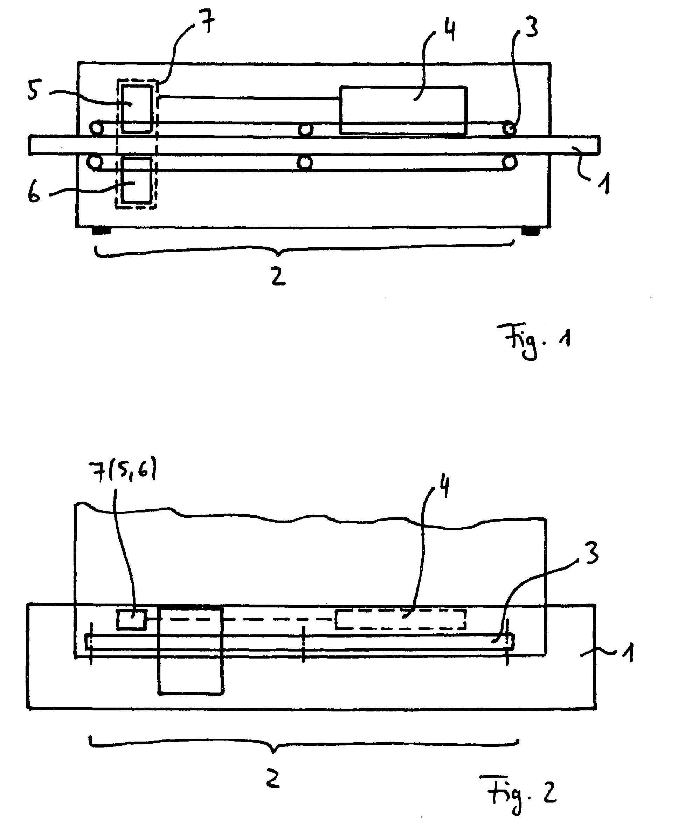

Das in den Figuren 1 und 2 dargestellte Gerät zum Durchlaufversiegeln von Folienbeuteln umfasst eine Förderstrecke 2 mit Folienbeutelförderelementen 3 und eine Heißsiegelstation 4 zum Versiegeln der relativ zum Auflagetisch 1 geförderten Folienbeutel. Die Förderstrecke 2 weist einen Auflagetisch 1 auf und die Heißsiegelstation 4 ist an der Förderstrecke 2 angeordnet.

Wesentlich ist nun, dass am Gerät zur Folienbeutelmaterialermittlung eine mit der Heißsiegelstation 4 verbundene Kontrolleinheit 7 angeordnet ist, die eine ein Licht definierter Wellenläge abgebende Lichtquelle 5 und dazu mindestens folienbeuteldick distanziert einen das von der Lichtquelle 5 abgegebene Licht mindestens teilweise aufnehmenden optischen Sensor 6 umfasst.

Bei der dargestellte Ausführungsform des erfindungsgemäßen Gerätes ist vorzugsweise vorgesehen, dass die Kontrolleinheit 7 am Anfang der Förderstrecke 2 angeordnet, die Lichtquelle 5 ein Laser und der Sensor 6 ein auf die definierte Wellenlänge abgestimmter Optosenor ist. Die Wellenlänge des Lasers zum Abtasten des Folienbeutelmaterials liegt vorzugsweise in einem Bereich zwischen 400 nm und 800 nm, besonders bevorzugt 650 nm.

Der Siegelvorgang läuft wie folgt ab: Zunächst wird ein zu versiegelnder Folienbeutel auf den Auflagetisch 1 aufgelegt und soweit nach rechts verschoben, bis die Folienbeutelförderelemente 3 diesen erfassen. Im nächsten Schritt wird der Folienbeutel bis zur neuartigen Kontrolleinheit 7 befördert. Dort angelangt, wird mittels der Lichtquelle 5 (Laserlicht bestimmter Wellenlänge) ein Lichtstrahl auf den Folienbeutel gerichtet. Je nach Material durchdringt ein gewisser Anteil des Lichtstrahls den Beutel. Mittels des auf der dem Laser gegenüberliegenden Seite angeordneten Sensors wird dann die durch den Folienbeutel hindurchgedrungene Lichtmenge ermittelt und daraus (wie erläutert) mit Hilfe der gespeicherten Daten das verwendete Folienbeutelmaterial bestimmt.

Diese Information wird anschließend an die Heißsiegelstation 4 weitergeleitet. Dort (oder auch schon in der Kontrolleinheit 7) wird überprüft, ob die tatsächlich an den Siegelbacken der Heißsiegelstation 4 vorliegende Temperatur für das gerade ermittelte Material geeignet ist. Ist dies der Fall, wird der Folienbeutel mit den Folienbeutelförderelementen 3 unmittelbar an die Heißsiegelstation 4 weitergeleitet und dort versiegelt. Stimmt die Temperatur nicht, wird solange entsprechend nachgeregelt, bis der Siegelvorgang mit der für dieses Material geeigneten Temperatur durchgeführt werden kann, was bedeutet, dass zwischen der Materialbestimmung an der Kontrolleinheit 7 und dem Siegelvorgang eine gewisse Nachregelzeit vergeht. Damit der Benutzer von dieser Wartezeit nicht irritiert ist, wird an einem Display des Gerätes eine entsprechende Information eingeblendet.

**Bezugszeichenliste**
- 1: Auflagetisch
- 2: Förderstrecke
- 3: Folienbeutelförderelemente
- 4: Heißsiegelstation
- 5: Lichtquelle
- 6: Sensor
- 7: Kontrolleinheit

## Patentansprüche

1. Gerät zum Durchlaufversiegeln von Folienbeuteln, umfassend eine einen Auflagetisch (1) aufweisende Förderstrecke (2) mit Folienbeutelförderelementen (3) und eine an der Förderstrecke (2) angeordnete Heißsiegelstation (4) zum Versiegeln der relativ zum Auflagetisch (1) geförderten Folienbeutel,
**dadurch gekennzeichnet,**
**dass** am Gerät zur Folienbeutelmaterialermittlung eine mit der Heißsiegelstation (4) verbundene Kontrolleinheit (7) angeordnet ist, die eine ein Licht definierter Wellenläge abgebende Lichtquelle (5) und dazu mindestens folienbeuteldick distanziert einen das von der Lichtquelle (5) abgegebene Licht mindestens teilweise aufnehmenden optischen Sensor (6) umfasst.

2. Gerät zum Durchlaufversiegeln von Folienbeuteln nach Anspruch 1,
**dadurch gekennzeichnet,**
**dass** die Kontrolleinheit (7) an der Förderstrecke (2) angeordnet ist.

3. Gerät zum Durchlaufversiegeln von Folienbeuteln nach Anspruch 1 oder 2,
**dadurch gekennzeichnet,**
**dass** die Lichtquelle (5) ein Laser ist.

4. Gerät zum Durchlaufversiegeln von Folienbeuteln nach einem der Ansprüche 1 bis 3,
**dadurch gekennzeichnet,**
**dass** der Sensor (6) ein auf die definierte Wellenlänge abgestimmter Optosenor ist.

5. Gerät zum Durchlaufversiegeln von Folienbeuteln nach einem der Ansprüche 1 bis 4,
**dadurch gekennzeichnet,**
**dass** die Kontrolleinheit (7) am Anfang der Förderstrecke (2) angeordnet ist.

6. Gerät zum Durchlaufversiegeln von Folienbeuteln nach einem der Ansprüche 1 bis 5,
**dadurch gekennzeichnet,**
**dass** die Wellenlänge zum Abtasten des Folienbeutelmaterials in einem Bereich zwischen 400 nm und 800 nm liegt, vorzugsweise 650 nm beträgt.
